(19) **Europäisches Patentamt**
**European Patent Office**
**Office européen des brevets**

(11) **EP 4 261 742 A1**

(12) **EUROPEAN PATENT APPLICATION**

(43) Date of publication:
**18.10.2023 Bulletin 2023/42**

(21) Application number: **22305541.9**

(22) Date of filing: **13.04.2022**

(51) International Patent Classification (IPC):
**G06N 3/04** *(2023.01)*

(52) Cooperative Patent Classification (CPC):
**G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Commissariat à l'énergie atomique et aux énergies alternatives 75015 Paris (FR)**

(72) Inventors:
• **MERLUZZI, Mattia**
  **38054 GRENOBLE CEDEX 09 (FR)**
• **CALVANESE STRINATI, Emilio**
  **38054 GRENOBLE CEDEX 09 (FR)**

(74) Representative: **Brevalex**
  **56, Boulevard de l'Embouchure**
  **B.P. 27519**
  **31075 Toulouse Cedex 2 (FR)**

(54) **OPTIMIZED CO-INFERENCE FOR A PLURALTY OF AI AGENTS IN A MOBILE COMMUNICATION NETWORK**

(57) The present invention concerns a method for performing co-inference between artificial intelligence (AI) agents in a mobile communication network where at least one AI agent is hosted by a user equipment (UE) and a set of AI helper agents are hosted by mobile edge servers (MECs). The AI agent may resort to the help of one AI helper to agent to offload an inference task on intermediate result output by an early exit point of its DNN. If offloading is decided, the intermediate result is encoded with a semantic dictionary of the AI helper agent and transmitted thereto. The AI helper agent is selected among a set of AI the selection being made in order to optimize at least one performance criterion of the mobile network.

FIG. 4

EP 4 261 742 A1

**Description**

**FIELD OF THE INVENTION**

The present invention relates to the field of artificial intelligence, and more specifically of deep neural networks (DNN). It also relates to the field of mobile edge computing (MEC) and machine-to-machine (M2M) semantic communication (SemCom).

**BACKGROUND OF THE INVENTION**

With the rapid progress of wireless technology and the upcoming 5G and beyond revolution, mobile services will require extensive computing resources, ubiquitous connection availability, ultra-low latency and low power consumption. However, the development of new applications and services is limited by the finite computing power and battery life of these devices. In order to cope with these limits, data-hungry and computing-intensive tasks can be offloaded to the cloud, at the expense of latency due to the difficulty of controlling end-to-end delays in such instance. To reduce end-to-end delay and the need for extensive user-cloud communication, it has been proposed to bring cloud support the closest possible to users and service consumers. This solution known as Mobile Edge Cloud, or Multi-access Edge Computing, extends cloud capabilities at the network edge by providing, caching and computing there. In practice, data will be offloaded in order to be processed at MEC servers deployed at the base stations of the wireless network.

One of the major current trends in MEC is to enable a new class of services involving machine learning (ML) and artificial intelligence (AI) instances running at the edge of the network. Indeed, computation and storage resources in a user equipment (UE) are often insufficient to perform computation of intensive tasks involved in learning and inference especially for real-time applications, such as autonomous control of vehicles. Hence, all or part of these computation tasks can be offloaded to a MEC server. It is recalled that ML encompasses a learning phase during which the model is trained on a training dataset and an inference phase in which the model performs a classification or a regression from fresh data based on the previously trained model. When using MEC for inference, it is critical to achieve an optimal trade-off between energy consumption (at system level), end-to-end latency (involving communication and computation), and inference reliability (e.g. accuracy, confidence, generalization capabilities).

As a typical example, artificial neural networks, simply denoted in the following as NN (*Neural Networks*) or DNN (*Deep Neural Networks*), can be trained and used for inference at the edge of a network or in the cloud.

Recently, it has been shown that a DNN can be trained in such a way that the inference results can be provided not only by the conventional output layer but also through an early side branch, possibly comprising one on more layers followed by an exit point, called side exit point. The branching off from the conventional processing path through all the layers of the DNN allows for a significant reduction of the inference time, albeit at the cost of a lower accuracy or reliability of the inference results. A description of a DNN equipped with early exit branches, also called Branchy Net, can be found in the paper by S. Teerapittayanon et al. entitled "Branchy Net: fast inference via early exiting from deep neural networks" published in Proc. 23rd Int. Conf. Pattern Recognition (ICPR), 2016, pp. 2464-2469.

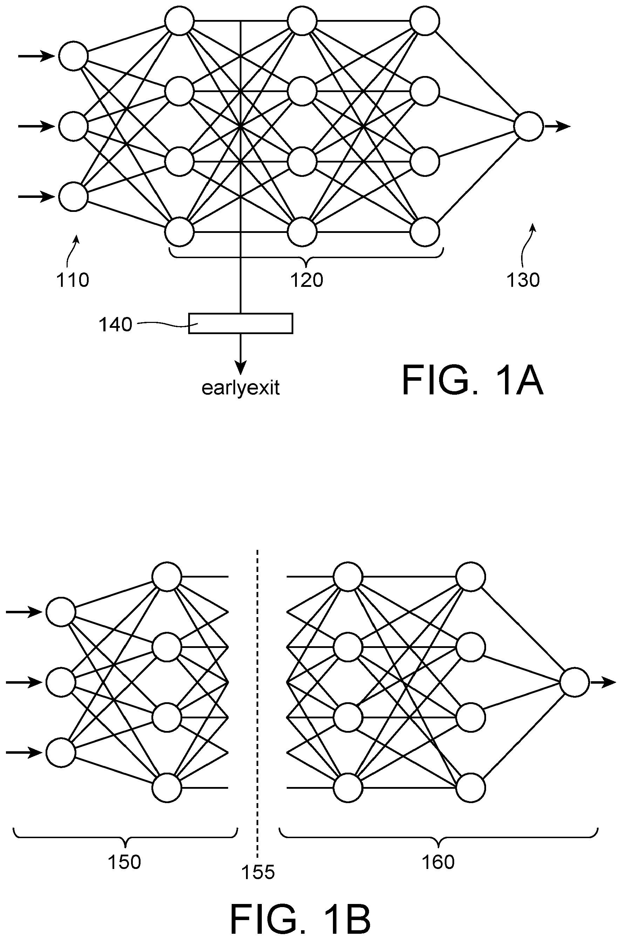

Fig. 1A shows an example of DNN architecture comprising an input layer 110, a plurality of hidden layers 120, an output layer 130 providing an inference result, and a side branch 140 providing a side exit.

A DNN can also be distributed between a UE and distant devices such as edge and/or cloud servers. More specifically, the first layers of the DNN may be hosted by the UE and the subsequent layers can be hosted by an edge or a cloud server. In some instances, the last layers including the output may be located again at the UE in order to carry out the final stages of the inference process. At any rate, a DDNN *(Distributed* DNN) is split at so-called splitting point, into at least a local sub-network and a distant sub-network, the local sub-network providing an intermediate computing result (e.g. basic feature extraction) whereas the distant sub-network performs the further part of the inference computation (e.g. classification). A description of a DDNN can be found in the article by S. Teerapittayanon et al. entitled "Distributed deep neural networks over the cloud, the edge and end devices" published in 2017 IEEE 37th International Conference on Distributed Computing Systems (ICDCS), 2017, pp. 328-339.

Fig. 1B shows an example of a DDNN which is split into a first sub-network, 150, hosted locally at a UE and a second sub-network, 160, hosted by a distance device (e.g. a server in the Cloud or at the edge). The frontier 155, located at a splitting point between the first sub-network and the second sub-network as be labelled as early exit since it can be viewed as providing an intermediate computation result to the second sub-network.

In the following, unless stated otherwise, the expression "early exit point" will encompass both a side exit point as described in relation to Fig. 1A and a splitting point as described in relation to Fig. 1B.

The distribution of inference computation between a mobile device and a distant server is sometimes referred to as co-inference (or cooperative inference). The balance of computation between a mobile device and an edge computing server, requires to carefully choose the splitting point while taking into account feature compression and communication overhead. It has been proposed to avail of the sparse representation of features output by the first sub-network and to resort joint source-channel coding in order to optimize the end-to-end deep learning architecture, thereby leading to a reduction of on-device computation and communication overhead. Such an optimization strategy has been described in the article by J. Shao et al. entitled "BottleNet++: and end-to-end approach for future compression in device-edge co-inference systems", 2020 IEEE International Conference on Communications Workshops (ICC Workshops), 2020, pp. 1-6.

Finally, semantic communications combined with artificial intelligence appears to be a key enabler of future 6G networks. Semantic communication represents a paradigm shift from classical Shannon communication theory. While the latter is based on the principle of "transmitting before understanding", i.e. transmitting raw data without regard to the purpose for which they are transmitted, the former makes use of AI in order to "understand before transmit". In other words, semantic communications aim at transmitting relevant features extracted from data instead of transmitting the raw data themselves. The relevance of the data will be determined by the targeted use at the receiver, hence the expression of goal-oriented communication. An application of semantic communication to co-inference has been described in the article by W. Yang et al. entitled "Semantic communication meets edge intelligence published on arXiv. org on Feb. 14. 2022.

However, the above-mentioned prior art does not provide any guidance as to how various AI agents, such as neural networks or sub-networks, should optimize their cooperation in terms of at least one inference performance criterion such as energy consumption, latency, prediction error for example. In the following we will refer to AI agents as entities equipped with computing and storage capabilities and storing at least one ML (Machine Learning) model.

The object of the present invention is therefore to propose a method of co-inference in a mobile communication network involving a plurality of AI agents, each AI agent being equipped with a neural network or sub-network, which allows to optimize at least one inference performance criterion of the network.

## BRIEF DESCRIPTION OF THE INVENTION

The present invention is defined in the appended independent claims. Various preferred embodiments are defined in the dependent claims.

## BRIEF DESCRIPTION OF THE DRAWINGS

The present invention will be better understood from the description of the following embodiments, by way of illustration and in no way limitative thereto:

Fig. 1A schematically represents a DNN architecture with an early side exit point;
Fig. 1B schematically represents a DNN architecture with a splitting point;
Fig. 2 schematically represents a plurality of AI agents cooperating for co-inference in a mobile communication network;
Fig. 3 schematically shows the architecture of an AI agent in the mobile communication network of Fig. 2;
Fig. 4 schematically represents a method of co-inference in a mobile communication network for optimizing an inference performance criterion, according to an embodiment of the present invention.

## DETAILED DISCLOSURE OF PARTICULAR EMBODIMENTS.

We will consider in the following a mobile communication network involving a plurality of AI agents. Each AI agent comprises a neural network or sub-network of a neural network. In some cases, the AI agents may host a plurality of neural networks/ sub-networks. Without loss of generality, it will be assumed in the following that one of these AI agents is hosted by a UE and the remaining agents are hosted by edge (or MEC) servers.

The AI agent hosted by the UE typically inputs raw data, for example from one or a plurality of sensors. As explained further below, it may output an intermediate inference result and offload the remaining inference computation to one or a plurality of MEC servers.

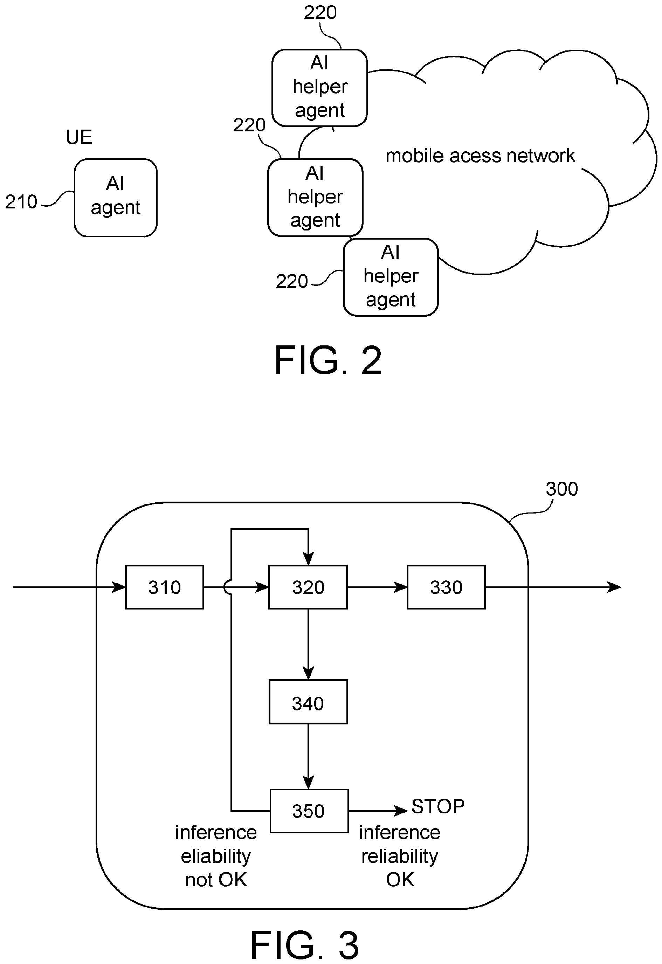

Fig. 2 schematically represents a plurality of AI agents cooperating for co-inference in a mobile communication network.

AI agent 210 is hosted by a UE and may transmit a first intermediate inference result to one or a plurality of cooperating AI agents, 220, hereinafter referred to as AI helper agents, hosted by MEC servers. The UE may be a mobile terminal or more generally a mobile device such as a robot for example. These MEC servers may be linked to one or a plurality of base stations, they may also or alternatively communicate with each other. For example, they can form a cluster connected to the base station serving the UE. The AI agent of the UE decides whether to offload (part or the whole) inference task to a helper AI agent or to perform the inference task locally. In the first case, the AI agent decides to which AI helper agent the intermediate inference result will be sent. According to a variant, the AI agent may simply ask for support and some surrounding AI agents my candidate for helping, the selection being made by the agent.

In turn, the AI helper agent may either output the inference result or simply calculate a second intermediate inference result to be transmitted to a further helper AI agent, for example hosted by another MEC or cloud server. This cooperation process may be iterated until the inference task is completed. The inference result may then be sent back to the UE on the downlink if needed.

Fig. 3 schematically shows the architecture of an AI agent in the mobile communication network of Fig. 2.

The AI agent, 300, inputs data which may be raw data, e.g. provided by a sensor, if the agent is hosted by a UE, or semantically encoded data received by a previous agent requesting help. In the latter case, the AI agent 300 acts as an AI helper agent and the input data is semantically decoded in semantic decoder 310.

The then semantically decoded data are subjected to an offloading decision in deciding module 320. This decision module may either decide whether to perform the inference task locally or to offload it to an AI helper agent.

If it is decided to perform the inference task locally, the previously decoded data are reencoded in local semantic encoder 340 and an early exit point is selected (a side exit point or a splitting point), define by layer index k. The intermediate result provided by this early exit point is then used for performing an inference reliability test in controlling module 350. If the inference reliability level is higher than a predetermined threshold, the inference task is stopped. Conversely, in the negative, the controlling module 350 informs the deciding module 320 that the inference based on the intermediate result output by the early exit point is not reliable for making a further decision.

If it is decided to resort to an AI helper agent, the offloading module 330 selects a target AI helper agent, performs a semantic encoding and transmits the thus semantically encoded data to said target AI helper agent.

At each iteration, the deciding module either selects the next early exit point (e.g. layer index k+1), or more generally a further early exit point (k+$\delta$ with $\delta \geq 1$ if the AI agent decides to skip one exit point) for performing the inference task or transmits the data to the offloading module for offloading the inference task to an AI helper agent.

The semantic encoding/decoding can rely on a transformer architecture based on a multi-head attention mechanism as described in the article by M. Sana et al. entitled "Learning semantics: an opportunity for effective 6G communications", published in Proc. 2022 IEEE 19th Annual Consumer Communications & Networking Conference (CCNC), Oct. 14, 2021 and detailed in the article by A. Vaswani et al. entitled "Attention is all you need", published in Proc. 31st Conference on Neural Information Processing Systems (NIPS 2017), Long Beach, CA, USA, Dec. 2017.

Alternatively, the semantic encoding/decoding may rely on a DNN autoencoder, the semantic encoded data being features in the latent space. For example, the autoencoder can be a sparse autoencoder.

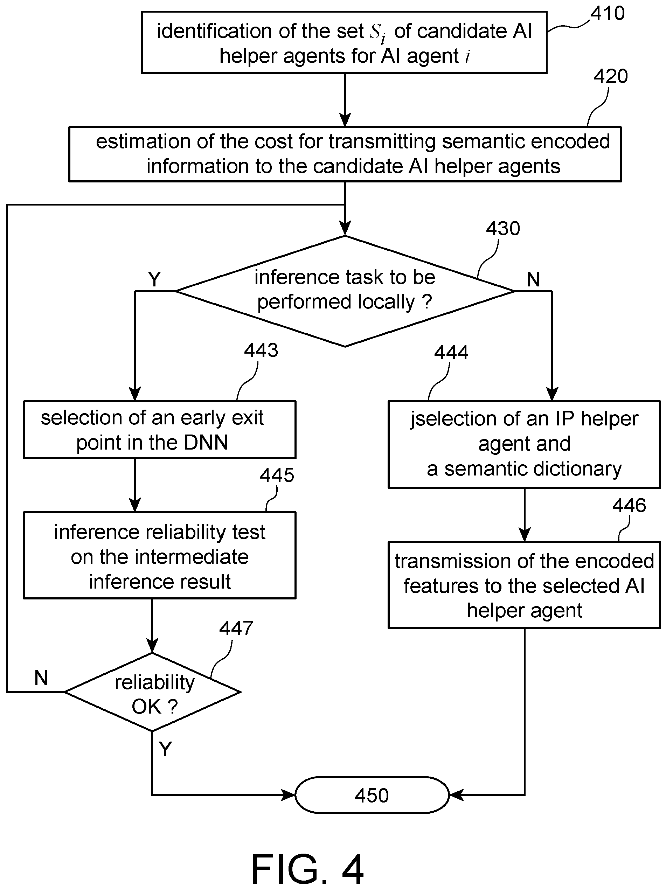

Fig. 4 schematically represents a method for performing co-inference between AI agents in a mobile communication network while optimizing an inference performance criterion, according to an embodiment of the present invention. The optimization of the inference performance criterion can be achieved by minimizing a cost function. This cost function can be expressed as an increasing function of energy consumption, latency, prediction error metrics, etc.

It is assumed here that all AI agents have been trained beforehand on a training dataset, that is all the neural networks or sub-networks including the one hosted on the UE and those hosted on the MEC or cloud servers.

Once the AI agents have been trained, the co-inference process is carried out from one agent to the next, starting from the one hosted by the UE.

Let us consider an AI agent $i$ and denote $S_i$ the set of AI helper agents which can be contacted by agent i in order to carry on the inference process.

At step 410, AI agent $i$ identifies the set $S_i$ of candidate helper agents. This information may be provided by the base station serving the UE or results from a discovery phase.

Next, at step 420, AI agent i estimates the cost of transmitting semantic encoded information to each of the candidate helper agents $j \in S_i$. This cost can be expressed for example in terms of latency or energy consumption for the transmission. It can be estimated by statistics on observed cost in previous processing.

At step 430, AI agent i decides whether to perform the inference task locally or to offload it to a candidate helper agent. This decision is made by the deciding module 320 described above. Offloading may be decided if a certain amount of computation has already been made or a given early exit point has been reached without the inference reliability threshold being attained. In some instances, it may even be decided *a priori* without performing any computation.

If AI agent i decides to perform the inference task locally, an early exit point is selected in the DNN (e.g. a side exit point or a splitting point defined by a layer k in the DNN) at step 443. The early exit point may be selected by incrementing the index layer previously used for inference. At any rate, the data are semantically encoded for being input to the DNN.

The inference reliability of the intermediate inference result output by the selected early exit point is then estimated at step 445 and a test is carried out at step 447 as to whether it is higher than a predetermined inference reliability threshold.

If said inference reliability is higher than said threshold, the inference task terminates at step 450. However, If the inference reliability is lower than the inference reliability threshold, the co-inference process goes back to step 430.

Conversely, if AI agent i decides to offload (at least part of) the inference task, it selects an AI helper agent $j \in$

$S_i$ and a semantic dictionary (or language) $D_\ell$ used by the helper agent at step 444.

A semantic dictionary is a set of symbols for encoding the features output by an early exit point of the DNN. The semantic encoding complies with the rules of a language and associates a feature (or more generally a concept) to symbols of said dictionary. A semantic encoded feature is then represented by semantic data comprised of symbols of a dictionary $D_\ell$. Conversely an AI helper agent may decode received semantic data to supply features to an input layer of the DNN.

As the semantic dictionary $D_\ell$ used by AI agent $i$ for encoding features may differ from the semantic dictionary $D_{\ell'}$ used for decoding the semantic data received by a candidate AI helper agent $j$, transcoding that is decoding with $D_l$ followed by encoding with $D_{\ell'}$ may be needed in some instances.

Selecting the AI helper agent and the semantic dictionary may consist in first selecting a target AI agent among $S_i$ and then identifying the semantic dictionary $D_{\ell'}$ used by this target AI agent. Reciprocally, it may consist in choosing among $S_i$ a target AI agent using the same semantic dictionary $D_l$ as the one used by AI agent $i$, or at least a semantic dictionary $D_{\ell'}$ inducing minimal inference distortion. Finally, it may consist in jointly selecting AI helper agent and the semantic dictionary.

The selection of the AI helper agent and semantic dictionary is made by a scheduling unit of the network, in order to satisfy at least one performance criterion of the network, as described further below.

At any rate, once the AI helper agent and the semantic dictionary have been selected, the intermediate inference result, that is the features provided by the early exit point are encoded by AI agent i with the semantic dictionary of the AI helper agent and transmitted to it for completing the inference task at step 446.

The inference process for AI agent i terminates at step 450. The result of co-inference may later be transmitted by the AI helper agent to the UE.

If a new inference task has to be performed on the basis of new data, the UE starts over again at step 430.

The selection of the AI helper agent and the semantic dictionary at step 444 is detailed hereinafter when performed collectively by a scheduling unit of the network. In this embodiment, the scheduling unit receives the offloading request of the UEs in the network or more specifically of those which may offload inference tasks to a cluster of MEC servers. For example, the UEs may be located in the same cell or a group of neighboring cells.

An inference task offloading request from an AI agent $i$, using a semantic dictionary $D_l$, to a AI helper agent $j$ can be expressed by a binary variable $a_{i,j,l}$ equal to 1 if it exists and 0 otherwise.

Furthermore, if we denote:

$C^{tx}_{i,j,\ell}$ the cost for AI agent $i$ to transmit to AI helper agent $j$ the features of the request, encoded with semantic dictionary $D_l$ ;

$C^{sem\_enc}_{i,j,\ell}$ the cost for AI agent i to encode features with semantic dictionary $D_l$ (e.g. computational costs);

$C^{rx}_{i,j,\ell}$ the cost for AI helper agent $j$ to receive from AI agent $i$ the features of the request encoded with semantic dictionary $D_l$ ;

$C^{sem\_dec}_{i,j,\ell}$ the cost for AI helper agent $j$ to decode with semantic dictionary $D_l$ features from AI agent i (e.g. computational costs);;

$P_{i,j,l}$ the probability that AI helper agent j will complete the inference task on the basis of the features of the request encoded with semantic dictionary $D_l$ and achieve an inference reliability level above a predetermined inference reliability threshold $R^{th}_i$ ;

$d_{i,j,l}$ the time needed for AI helper agent $j$ to complete the inference task on the basis of features of the request encoded with semantic dictionary $D_l$ while achieving said inference reliability threshold $R^{th}_i$ ;

the scheduling unit aims at minimizing an overall cost function CF defined as:

$$CF(a) = \sum_{i=1}^{I} \sum_{j=1}^{J} \sum_{\ell=1}^{L} a_{i,j,\ell} \left( C^{sem\_enc}_{i,j,\ell} + C^{tx}_{i,j,\ell} + C^{rx}_{i,j,\ell} + C^{sem\_dec}_{i,j,\ell} \right)$$

under the following constraints:

(a)

$$\left(\sum_{j=1}^{I}\sum_{\ell=1}^{L}a_{i,j,\ell}\right)\leq 1 \quad \forall i$$

(b)

$$\left(\sum_{j=1}^{J}\sum_{\ell=1}^{L}a_{i,j,\ell}P_{i,j,\ell}\right)\geq S_i^{th} \quad \forall i$$

(c)

$$\left(\sum_{j=1}^{J}\sum_{\ell=1}^{L}a_{i,j,\ell}d_{i,j,\ell}\right)\leq d_i^{\max} \quad \forall i$$

(d)

$$\left(\sum_{i=1}^{I}a_{i,j,\ell}\right)\leq N_j^{\max} \quad \forall j$$

Constraint (a) expresses the condition that any of the AI agents (hosted by the UES) requesting the offload of an inference task can choose one AI helper agent at most (in a more general embodiment a predetermined maximum number of helpers $N_i^{\max}$ per agent may express the upper bound). Constraint (b) expresses the condition that for each of AI agents the probability that the selected helper agent succeeds to complete the inference task with the required reliability lies above a predetermined threshold.

Constraint (c) expresses the condition that for each of AI agents, that the selected AI helper agent will complete the inference task within a given maxim delay. This constraint can be viewed as a maximum latency constraint, $d_i^{\max}$, imposed by each of the offload requesting AI agent i .

Finally, constraint (d) expresses the condition that each of the AI helper agent can only serve a limited number $N_j^{\max}$ of helping requests simultaneously.

The cost function can express an overall energy consumption for example.

The optimal variable distribution $a^*$ which minimizes cost function $CF(a)$ under constraints (a)-(d), enables to assign to each AI agent requesting an inference task offloading, an AI helper agent. The optimal variable distribution $a^*$ can be determined by a linear programming algorithm such as branch and bound methods or the simplex algorithm. Once the scheduling unit has determined the optimal variable distribution $a^*$ the information of AI helper agent assignment is transmitted to the UEs.

**Claims**

1. Method for performing co-inference between artificial intelligence (AI) agents in a mobile communication network, at least one AI agent being hosted by a user equipment (UE) and a set of AI helper agents being hosted by mobile edge servers (MECs), the AI agent and the AI helper agents each comprising a deep neural network (DNN) or a sub-network thereof, the DNN of the AI agent exhibiting an early exit point so as to output an intermediate inference result and to request to one of the set of AI helper agents to complete the inference task based on said intermediate inference result, **characterized in that** the AI agent performs an offloading decision step in which it decides whether to perform the inference task locally or to offload it to an AI helper agent, in which case the intermediate inference result is encoded with a semantic dictionary of and transmitted to an AI helper agent selected among the set of AI helper agents if an offloading is decided, the selection of the AI helper agent being made in order to optimize at least one inference performance criterion of the mobile communication network.

**2.** Method for performing co-inference between artificial intelligence agents in a mobile communication network according to claim 1, **characterized in that** if the AI agent decides to perform the inference task locally, it compares the reliability of the intermediate inference result at the early exit of the DNN with a predetermined inference reliability threshold and in case the former does not exceed the latter, returns to the offloading decision step, and else stops by outputting the intermediate reference result.

**3.** Method for performing co-inference between artificial intelligence agents in a mobile communication network according to claim 2, **characterized in that**, after returning to the offloading decision step, the AI agent decides to select a further early exit point corresponding to a subsequent layer of the DNN, and the reliability of the intermediate output by the further early exit point is again compared with the predetermined inference reliability threshold.

**4.** Method for performing co-inference between artificial intelligence agents in a mobile communication network according to claim 2 or 3, **characterized in that**, if the AI agent decides to offload the inference task to an AI helper agent, it jointly selects a target AI helper agent and a semantic dictionary for encoding the intermediate output result.

**5.** Method for performing co-inference between artificial intelligence agents in a mobile communication network according to claim 2 or 3, **characterized in that** the AI agent first selects a target AI helper agent among the set of AI helper agents and then identifies the semantic dictionary used by said target AI helper agent.

**6.** Method for performing co-inference between artificial intelligence agents in a mobile communication network according to claim 2 or 3, **characterized in that** the AI agent first selects the target AI helper agent in a subset of AI helper agents using the same semantic dictionary as the one used by the AI agent.

**7.** Method for performing co-inference between artificial intelligence agents in a mobile communication network according to claim 6, **characterized in that** the mobile communication network comprises a first plurality $I$ of AI agents hosted by UEs and a second plurality $J$ of AI helper agents hosted by MECs, a target AI helper agent being assigned to each of the AI agents requesting an offload of an inference task, the assignment being obtained by minimizing a cost function over the first plurality of AI agents and the second plurality of AI helper agents.

**8.** Method for performing co-inference between artificial intelligence agents in a mobile communication network according to claim 7, **characterized in that** the cost function is expressed in terms of energy consumption and/or latency and/or inference reliability

**9.** Method for performing co-inference between artificial intelligence agents in a mobile communication network according to claim 7 or 8, **characterized in that** the cost function is expressed as

$$CF(a) = \sum_{i=1}^{I} \sum_{j=1}^{J} \sum_{\ell=1}^{L} a_{i,j,\ell} \left( C_{i,j,\ell}^{sem\_enc} + C_{i,j,\ell}^{tx} + C_{i,j,\ell}^{rx} + C_{i,j,\ell}^{sem\_dec} \right)$$

where $a_{i,j,l}$ is a binary variable equal to 1 if AI helper agent $j$ using semantic dictionary $D_l$ is assigned to AI agent $i$, $C_{i,j,\ell}^{tx}$ represents the cost for AI agent $i$ to transmit to AI helper agent $j$ the features of the offloading request, encoded with semantic dictionary $D_l$, $C_{i,j,\ell}^{sem\_enc}$ represents the cost for AI agent $i$ to encode features with semantic dictionary $D_l$, $C_{i,j,\ell}^{rx}$ represents the cost for AI helper agent $j$ to receive from AI agent $i$ the features of the request encoded with semantic dictionary $D_l$, $C_{i,j,\ell}^{sem\_dec}$ represents the cost for AI helper agent $j$ to decode with semantic dictionary $D_l$ features from AI agent $i$, $P_{i,j,l}$ represents he probability that AI helper agent $j$ will complete the inference task on the basis of the features of the request encoded with semantic dictionary $D_l$ and achieve an inference reliability level above a predetermined inference reliability threshold $R_i^{th}$, $d_{i,j,l}$ represents the time needed for AI helper agent $j$ to complete the inference task on the basis of features of the request encoded with semantic dictionary $D_l$ while achieving a predetermined inference reliability threshold $R_i^{th}$ .

**10.** Method for performing co-inference between artificial intelligence agents in a mobile communication network according to claim 9, **characterized in that** the cost function is minimized under the constraints:

(a)

$$\left( \sum_{j=1}^{I} \sum_{\ell=1}^{L} a_{i,j,\ell} \right) \leq 1 \quad \forall i$$

(b)

$$\left( \sum_{j=1}^{J} \sum_{\ell=1}^{L} a_{i,j,\ell} P_{i,j,\ell} \right) \geq S_i^{th} \quad \forall i$$

(c)

$$\left( \sum_{j=1}^{J} \sum_{\ell=1}^{L} a_{i,j,\ell} d_{i,j,\ell} \right) \leq d_i^{\max} \quad \forall i$$

(d)

$$\left( \sum_{i=1}^{I} a_{i,j,\ell} \right) \leq N_j^{\max} \quad \forall j$$

where represents a predetermined inference reliability threshold for AI agent i, $d_i^{\max}$ represent a maximum latency for AI agent i, and $N_j^{\max}$ represents a maximum number of helping request which can be simultaneously served by AI helper agent j .

FIG. 1A

FIG. 1B

220

AI
helper
agent

220

UE

AI
agent

210

AI
helper
agent

mobile acess network

AI
helper
agent

220

## FIG. 2

300

310 → 320 → 330 →

320 → 340

340 → 350

350 → STOP

inference
eliability
not OK

inference
reliability
OK

## FIG. 3

identification of the set $S_i$ of candidate AI
helper agents for AI agent $i$ — 410

estimation of the cost for transmitting semantic encoded
information to the candidate AI helper agents — 420

430

inference task to be
performed locally ?

Y

N

443

selection of an early exit
point in the DNN

444

jselection of an IP helper
agent and
a semantic dictionary

445

inference reliability test
on the intermediate
inference result

446

transmission of the encoded
features to the selected AI
helper agent

447

reliability
OK ?

N

Y

450

FIG. 4

Europäisches
Patentamt

European
Patent Office

Office européen
des brevets

# EUROPEAN SEARCH REPORT

Application Number

EP 22 30 5541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EN LI ET AL: "Edge Intelligence: On-Demand Deep Learning Model Co-Inference with Device-Edge Synergy", ARXIV.ORG, CORNELL UNIVERSITY LIBRARY, 201 OLIN LIBRARY CORNELL UNIVERSITY ITHACA, NY 14853, 20 June 2018 (2018-06-20), XP081076383, * paragraph [000I] – paragraph [0III] * ----- | 1-10 | INV. G06N3/04 |

TECHNICAL FIELDS
SEARCHED (IPC)

G06N
G06F

The present search report has been drawn up for all claims

| Place of search | Date of completion of the search | Examiner |
|---|---|---|
| The Hague | 21 September 2022 | Falco, Gabriele |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. TEERAPITTAYANON et al.** Branchy Net: fast inference via early exiting from deep neural networks. *Proc. 23rd Int. Conf. Pattern Recognition (ICPR),* 2016, 2464-2469
- **S. TEERAPITTAYANON et al.** Distributed deep neural networks over the cloud, the edge and end devices. *2017 IEEE 37th International Conference on Distributed Computing Systems (ICDCS),* 2017, 328-339
- **J. SHAO et al.** BottleNet++: and end-to-end approach for future compression in device-edge co-inference systems. *2020 IEEE International Conference on Communications Workshops (ICC Workshops),* 2020, 1-6
- **W. YANG et al.** *Semantic communication meets edge intelligence,* 14 February 2022
- **M. SANA et al.** Learning semantics: an opportunity for effective 6G communications. *Proc. 2022 IEEE 19th Annual Consumer Communications & Networking Conference (CCNC),* 14 October 2021
- **A. VASWANI et al.** Attention is all you need. *Proc. 31st Conference on Neural Information Processing Systems (NIPS 2017), Long Beach, CA, USA,* December 2017